(19) Europäisches Patentamt

European Patent Office

Office européen des brevets

(11) Veröffentlichungsnummer: **0 536 695 A1**

(12) **EUROPÄISCHE PATENTANMELDUNG**

(21) Anmeldenummer: 92117035.3

(22) Anmeldetag: 06.10.92

(51) Int. Cl.5: **G01N 21/89**, G01B 11/14, B41L 1/32, B42D 5/02, G07C 3/14

(30) Priorität: 08.10.91 DE 4133320

(43) Veröffentlichungstag der Anmeldung:
14.04.93 Patentblatt 93/15

(84) Benannte Vertragsstaaten:
AT BE CH DE DK ES FR GB IT LI NL SE

(71) Anmelder: Zweckform Büro-Produkfe GmbH
Miesbacher Strasse 5
W-8155 Valley/Oberlaindern(DE)

(72) Erfinder: Philipp, Gottfried, Dr.
St. Josef-Strasse 7
W-8150 Holzkirchen(DE)
Erfinder: Zschaeck, Michael
Oberländerstrasse 24
W-8000 München 70(DE)
Erfinder: Steinbeis, Michael
Gmain 23 1/4
W-8204 Brannenburg(DE)

(74) Vertreter: Ritter und Edler von Fischern,
Bernhard,Dipl.-Ing. et al
HOFFMANN - EITLE & PARTNER
Arabellastrasse 4
W-8000 München 81 (DE)

(54) Kontinuierlich perforationskontrollierte Endlosformulare sowie Vorrichtung und Verfahren zu deren Herstellung.

(57) Die Erfindung betrifft neuartige Endlosformulare mit zumindest Querperforationen, deren Perforationsfestigkeit kontinuierlich kontrolliert ist, so daß für ein Produktionsvolumen die Einhaltung enger Bereichsgrenzen für die Perforationsfestigkeit garantiert werden kann. Der Variationskoeffizient der Perforationsfestigkeit liegt vorzugsweise unter 6%. Dazu weist die Vorrichtung zur Herstellung der Endlosformulare eine Meßvorrichtung auf, die eine Lichtquelle, einen Detektor und eine Auswerteeinrichtung umfaßt. Die Perforationsfestigkeit wird ermittelt auf der Grundlage der Breite eines Perforationsspaltes, der sich bei einer vorgegebenen Bahnspannung nach Einbringen der Perforation einstellt.

Fig.1

Die Erfindung betrifft Endlosformulare mit zumindest Querperforationen sowie eine Vorrichtung und ein Verfahren zu deren Herstellung.

Endlosformulare für EDV-Ausdrucke sind quer- und längsperforiert, um einerseits eine Faltung der Papierbahn für die Ablage der Formulare in einem Stapel und andererseits eine Trennung der einzelnen Formulare voneinander und von überflüssigen Formularbestandteilen, z.B. Transportändern zu ermöglichen. An die Perforationen werden daher zwei grundsätzlich entgegengesetzte Anforderungen gestellt. Denn zum einen ist für die Bearbeitung der Formulare in einem kontinuierlichen Prozeß ein abrißfreier Lauf durch die Bearbeitungsanlagen, z.B. einen Drucker zu gewährleisten; zum anderen darf aber eine zuverlässige, teilweise auch automatisch erfolgende Trennung der Formulare nicht unnötig erschwert oder gar unmöglich gemacht wrid. Der Widerstand, den die Perforation dem Einreißen bzw. dem Weiterreißen entgegensetzt, d.h. die Festigkeit der Perforation - im folgenden Perforationsfestigkeit - darf angesichts dessen nur in möglichst engen Grenzen schwanken.

Die Perforation, insbesondere die Querperforation einer Papierbahn werden bislang bei der Herstellung mit Hilfe von Messerwalzen in das Papier eingebracht. Dabei sind auf einer Messerwalze eine oder mehrere Messerreihen so angeordnet, daß von den Messern auf der rotierenden Messerwalze das Papier in regelmäßigen Abständen durchschnitten und so die Perforation eingebracht wird.

Bei Endlosformularen basiert die Perforationsfestigkeit, die beim Einbringen einer Perforation in eine Papierbahn erzielt wird, auf den Papiereigenschaften bzw. der Papierbeschaffenheit und auf der Qualität der Perforation selbst, d.h. letztlich auf der Qualität der Perforationsvorrichtung. In Bezug auf die herkömmliche Perforationsvorrichtung kommt der Güte und dem Abnutzungsgrad der Perforationsmesser und der Präzision der Einstellung der Messerwalze eine entscheidende Bedeutung zu. Bei den Papiereigenschaften ist insbesondere die Längsbruchlast als ausschlaggebende Größe zu nennen, die auf die erzielte Perforationsfestigkeit einen entscheidenden Einfluß ausübt. Schwankungen in diesen Bereichen führen unweigerlich zu einer Schwankung der Perforationsfestigkeit.

Die Bruchkraft von Papier kann nach bekannten Meßmethoden, etwa nach DIN 53112 ermittelt werden. Für die nicht zerstörungsfreie Messung der Perforationsfestigkeit kann ein Perforationsmeßgerät nach dem System FOGRA (Deutsche Forschungsgesellschaft für Druck- und Reproduktionstechniken e.V.) verwendet werden.

In diesem Zusammenhang ist festzustellen, daß ausgehend von einer durch das Papier vorgegebenen Festigkeit eine Verschlechterung eintritt, wenn die Perforation in das Papier eingebracht wird. Denn für den Variationskoeffizient der Längsbruchlast des verwendeten Papiers werden bei modernen Papierqualitäten Werte von 3% bis 4% erzielt; diese Werte werden durch das Einbringen der Perforation auf über 15% verschlechtert. Das bedeutet, daß die Schwankungen um einen gewünschten Wert für die Perforationsfestigkeit nach dem Einbringen der Perforation erheblich größer sind, als dies durch die Schwankungen der Papiereigenschaften tatsächlich erforderlich wäre. Mit anderen Worten werden Fortschritte, die bei der Herstellung von Papier im Hinblick auf eine Vergleichmäßigung der Eigenschaften und einen Abbau von Schwankungen der Beschaffenheit in den letzten Jahren erreicht wurden, bei den bisher bekannten Verfahren und Vorrichtungen zur Einbringung der Perforation im wesentlichen zunichte gemacht.

Die Hersteller von Maschinen für die Verarbeitung von Endlosformularen, einschließlich der Nachverarbeitungsmaschinen geben Wertebereiche für die Perforationsfestigkeit an, die zweckmäßigerweise vom Benutzer einzuhalten sind, um einen optimalen Durchlauf durch die Maschine und eine gute Ablage der Endlosformulare im Stapler sicherzustellen. Ein Unterschreiten des unteren Grenzwertes kann zu Papierabrissen während der Verarbeitung führen; bei einem Überschreiten des oberen Grenzwertes können Ablageschwierigkeiten oder Versagen beim Trennen der Formulare auftreten. Angesichts der oben erwähnten Schwankungen und der Probleme bei der Herstellung sind die Wertebereiche in den meisten Fällen sehr breit und erlauben Abweichungen von bis zu ± 20% von einem mittleren Wert. Engere Toleranzen hinsichtlich der Perforationsfestigkeit sind aber wünschenswert, da auf diese Weise höhere Verarbeitungsgeschwindigkeiten und qualitativ bessere Produkte mit entsprechend konstruierten Verarbeitungsmaschinen wie etwa Hochleistungsdruckern möglich wären bzw. die Fehlerquote aufgrund von Papierabrissen oder Ablagefehlern bei herkömmlichen Anlagen zu senken wäre.

Der Erfindung liegt daher die Aufgabe zugrunde, neuartige Endlosformulare zu schaffen, die im Hinblick auf deren Einsetzbarkeit in Verarbeitungsmaschinen für Endlosformulare besonders günstige Eigenschaften aufweisen. Insbesondere sollen die Endlosformulare eine verbesserte Perforationsfestigkeit besitzen, die sie für diesen Einsatz hervorragend geeignet sein läßt. Ferner ist die Erfindung auf die Angabe von Vorrichtungen, sowie Verfahren zur Herstellung derartiger Endlosformulare gerichtet.

Gelöst wird die zuvor genannte Aufgabe durch die Schaffung von Endlosformularen mit Perforationen, bei denen die Perforatiaonsfestigkeit der Querperforation kontinuierlich kontrolliert ist, so daß der Variationskoeffizient der Perforationsfestigkeit unter einem vorgegebenen Grenzwert, vorzugsweise unter 6% liegt. In einer besonders vorteilhaften Ausgestaltung liegt der Variationskoeffizient unter 4%.

Ferner wird die Aufgabe gelöst durch ein Verfahren zur Herstellung der Endlosformulare, sowie eine Vorrichtung zur Durchführung des Verfahrens.

Die Erfindung beruht auf der Erkenntnis, daß bei gleichen Papieren ein Faserbruch im wesentlichen immer nach der gleichen Dehnungsstrecke einsetzt; das bedeutet, daß sich gleichausgestattete Papiere hinsichtlich der Grenzen ihrer irreversiblen Verformung im wesentlichen gleich verhalten. Unter gleichausgestatteten Papieren werden solche verstanden, die gleiches Flächengewicht und gleiche Ausstattung bei der Herstellung bezüglich Leimung, Fasergröße, Faserorientierung und Feststoffgehalt aufweisen.

Im folgenden wird die Erfindung unter Bezugnahme auf die Zeichnungen genauer beschrieben, in denen zeigt:

Fig. 1
eine Meßvorrichtung für die Herstellung perforationsfestigkeitskontrollierter Endformulare gem. der Erfindung und
Fig. 2A, 2B, 2C
verschiedene Perforationsspalte und die korrespondierenden Detektorsignale.

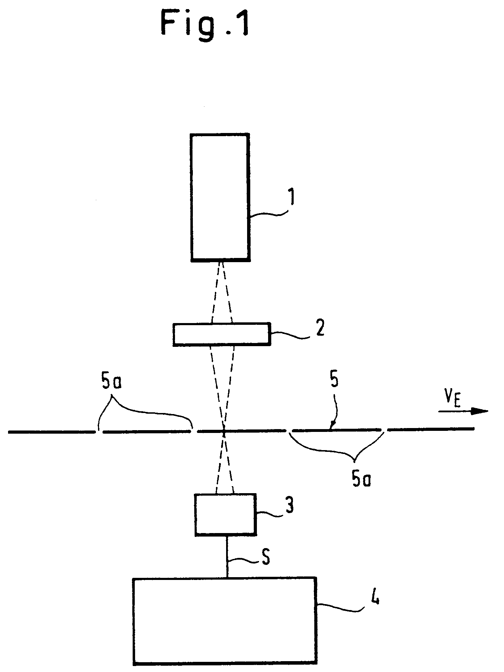

Im folgenden wird zunächst anhand von Fig. 1 eine Meßvorrichtung beschrieben, mit der die Qualität der Perforation erfaßt und die erzielte Perforationsfestigkeit bestimmt wird. Die Meßvorrichtung stellt zusammen mit einem bekannten Perforationsaggregat ein Ausführungsbeispiel einer Vorrichtung zur Herstellung von erfindungsgemäß perforationsfestigkeitskontrollierten Endlosformularen dar.

Die Meßvorrichtung umfaßt eine Lichtquelle 1, vorzugsweise eine niederenergetische Laserlichtquelle, z.B. Laserdioden mit 3 bis 5 mW Leistung, eine optische Einrichtung 2 zur Bündelung des von der Lichtquelle ausgehenden Lichts, eine Detektoreinrichtung 3 zur Aufnahme des Lichts und zur Abgabe eines Detektorsignals S und eine Auswerteeinrichtung 4 zur Auswertung des Detektorsignals. In Fig. 1 sind ferner Endlosformulare 5 mit Perforationsspalten 5a in einer Ansicht quer zur Laufrichtung (Pfeil) der Endlosformulare dargestellt. Die optische Einrichtung 2 bündelt das Licht von der Lichtquelle 1 derart, daß in der Ebene der Endlosformulare der Lichtfleck mit dem kleinsten Durchmesser erzeugt wird. Vorzugsweise verläuft das Licht senkrecht zur Ebene der Endlosformulare.

Das Licht durchdringt die Endlosformulare 5 nicht oder vorzugsweise nur so geringfügig, daß es beim Erreichen der Detektoreinrichtung 3 nur ein geringes Detektorsignal S hervorruft, das als Grundsignal genutzt werden kann; bleibt dieses Grundsignal aus, kann auf einfache Weise ein Fehler in der Meßvorrichtung erkannt werden.

Werden die Endlosformulare 5 in Richtung des Pfeils $V_E$ in Fig. 1 bewegt, tritt das Licht an den Stellen der Perforationsspalte 5a durch die Endlosformulare hindurch, gelangt zur Detektoreinrichtung 3 und ruft ein charakteristisches Detektorsignal S hervor, das an die Auswerteeinrichtung 4 weitergeleitet wird. Die Größe und Art des Detektorsignals wird von der Auswerteeinrichtung 4 zur Überprüfung der Perforationsspalte 5a und damit zur Bestimmung der Perforationsfestigkeit ausgewertet. Das Detektorsignal S besitzt die im folgenden beschriebene Abhängigkeit von den Perforationsspalten 5a, die mit Hilfe vergleichender Versuche auf der Grundlage von mikroskopischen Beurteilungen und Perforationsfestigkeitsmessungen - unter Zerstörung der Perforation - ermittelt wurde.

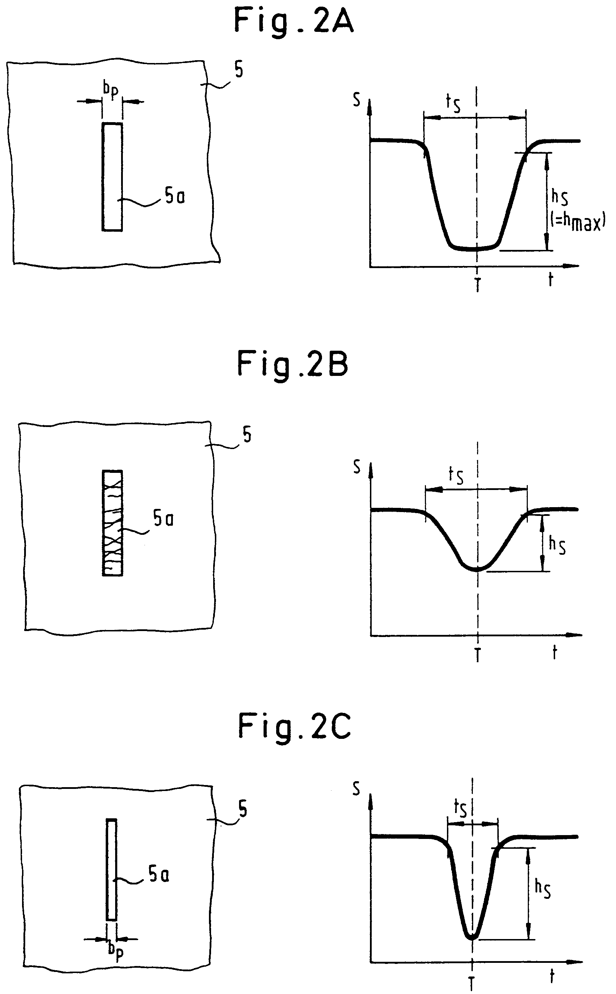

In den Fig. 2A bis 2C sind zur Erläuterung dieser Abhängigkeit des Detektorsignals beispielhafte Perforationsspalte 5a in Endlosformularen 5 in vergrößerter Darstellung, sowie in S/t-Diagrammen die entsprechenden Detektorsignale S gezeigt, die von dem durch die Perforationsspalte hindurchtretenden Licht hervorgerufen werden. Nach Einbringen des Perforationsschnittes bildet sich aufgrund der bei der Bearbeitung der Papierbahn vorhandenen Spannung ein Perforationsspalt mit einer bestimmten Perforationsspaltbreite aus, die von den Papiereigenschaften, der vorhandenen Papierbahnspannung und dem Schnitt/Steg-Verhältnis der Perforation abhängt. Die Perforationsfestigkeit korreliert zur Breite des Perforationsspaltes, denn die Breite zeigt an, wie weit das Papier unter der aufgebrachten Belastung von der Bruchgrenze entfernt ist. Denn durch die Einbringung der Perforation findet eine Schwächung des tragenden Papierquerschnittes statt, so daß die Papierbahnspannung zu einer Dehnung des Papiers in den tragenden Stegen der Perforation führt. Das bedeutet, daß die Breite der Perforationsspalte anzeigt, wieviel Kraft noch aufgenommen werden muß, um das Papier zu reißen, so daß ausgehend von der bekannten Bahnspannung die Kraft bestimmt werden kann, die zum Zerreißen der Perforation letztlich noch erforderlich ist. Das bedeutet aber, daß die Perforationsfestigkeit auf der Grundlage der Breite der Perforationsspalte ermittelt werden kann. Auf diese Weise werden die Papiereigenschaften in die Messung und die Beurteilung der Perforationsfestigkeit einbezogen.

In Fig. 2A ist ein erster Perforationsspalt 5a dargestellt; anhand des S/t-Diagramms in Fig. 2A wird das durch diesen Perforationsspalt erzeugte Detektorsignal S erläutert. Der Perforationsspalt 5a besitzt eine Breite $b_P$ und korreliert bei einer vorgegebenen Papierqualität und einem vorgegebenen Schnitt/Steg-Verhältnis der Perforation zu einer bestimmten Perforationsfestigkeit. Bei dem Perforationsspalt 5a sind im Inneren keine Papierfasern mehr vorhanden, die die beiden Längsseiten des Perforationsspaltes mit einander verbinden oder in den Perforationsspalt hineinstehen, da beim Einbringen der Perforation das Papier sauber durchtrennt wurde. Die Bruchkraft des Papiers und das Schnitt/Steg-Verhältnis der Perforation bestimmen bei einem derart eingebrachten Peforationsspalt die Perforationfestigkeit.

Gelangt der Perforationsspalt 5a gem. Fig. 2A in den Bereich des Lichtweges der Meßvorrichtung gem. Fig. 1, tritt das Licht durch die Ebene der Papierbahn hindurch und erreicht die Detektoreinrichtung 3. Aufgrund des auftreffenden Lichts erzeugt die Detektoreinrichtung 3 ein Detektorsignal S, dessen Verlauf über der Zeit in dem S/t-Diagramm in Fig. 2A dargetellt ist. Das Detektorsignal S wird im wesentlichen durch die beiden Größen $t_S$ und $h_S$, d.h. die Signaldauer und den Signalhub charakterisiert.

Die Signaldauer $t_S$ richtet sich nach der Breite $b_P$ des Perforationsspaltes 5a und der Geschwindigkeit $V_E$, mit der die Endlosformulare 5 in der Richtung des Pfeiles in Fig. 1 bewegt werden. Da die Bewegungsgeschwindgkeit $V_E$ der Endlosformulare bei der Herstellung bekannt ist oder aber zumindest auf einfache Weise mit Hilfe einer geeigneten Meßeinrichtung zu erfassen ist, kann die Signaldauer $t_S$ zur Ermittlung der Breite $b_P$ des Perforationsspaltes 5a herangezogen werden. Denn die Breite $b_P$ des in die Papierbahn eingebrachten Perforationsspaltes 5a wird über die Beziehung $b_P = t_S \times V_E$ bestimmt. Die Breite $b_P$ korreliert mit der Perforationsfestigkeit, ausgehend von einer gleichbleibenden Bahnspannung der Endlosformulare. Bei den vergleichenden Untersuchungen wurde aber festgestellt, daß Änderungen der Papiereigenschaften in den Punkten Faserlänge, Faserorientierung und Flächengewicht keinen Einfluß auf diesen Zusammenhang zwischen der Breite $b_P$ und der Perforationsfestigkeit haben. Die Breite $b_P$ zeigt daher an, wie weit das Papier unter der aufgebrachten Belastung von der Bruchgrenze entfernt ist, mit anderen Worten, wieviel Kraft noch aufgenommen werden muß, um das Papier zu reißen.

Der Signalhub $h_S$ erlaubt eine Aussage über die Güte des Perforationsspaltes, da nur für den Fall, daß sämtliche Papierfasern im Bereich des Schnittes durchtrennt wurden, der in Fig. 2A gezeigte maximale Signalhub $h_S = h_{max}$ erreicht wird. Je mehr Fasern in den Perforationsspalt hineinstehen, umso geringer ist der Signalhub $h_S$ des Detektorsignals. Der Signalhub $h_S$ führt daher zu einer eindeutigen Aussage über die Güte des Schnittes, mit dem die Perforation in das Papier eingebracht wurde, bzw. über die Perforation selbst.

Der maximale Signalhub $h_{max}$ hängt grundsätzlich aber auch davon ab, ob der Lichtfleck in der Ebene der Endlosformulare 5 eine Größe besitzt, die es gestattet, daß die gesamte Lichtmenge durch den Perforationsspalt 5a der Breite $b_P$ hindurchtritt, ohne daß ein Teil des Lichts von den Längsseiten des Perforationsspalts abgeschattet wird. Die gesamte Lichtmenge kann nur durch den Perforationsspalt 5a hindurchtreten, wenn der Durchmesser des in der Ebene der Endlosformulare 5 (vgl. Fig. 1) fokussierten Lichtflecks kleiner ist als die Breite $b_P$ des Perforationsspalts, da anderenfalls der Lichtfleck bei seiner Bewegung über den Perforationsspalt von den Längskanten des Perforationsspalts stets teilweise abgedeckt wird, ohne jemals ganz innerhalb des Spalts zu liegen. Daher ist vorzugsweise sowohl die Lichtquelle als auch die optische Einrichtung so auszugestalten, daß ein möglichst kleiner, exakt fokussierter Lichtfleck in der Ebene der Endlosformulare erzielt wird.

In Fig. 2B ist ein zweiter Perforationsspalt 5a im Endlosformular 5 dargestellt, bei dem nicht alle Papierfasern während des Einbringens der Perforation in die Papierbahn im Bereich des Perforationsspalts 5a durchtrennt wurden. Die Breite $b_P$ entspricht aber dem vorgegebenen Wert und damit der Breite des Perforationsspalts in Fig. 2A. Hinsichtlich der Signaldauer $t_S$ unterscheidet sich das Detektorsignal S, das durch den Perforationsspalt gem. Fig. 2B hervorgerufen wird, nicht von dem des Perforationsspalts gem. Fig. 2A. Im Gegensatz dazu ist aber der Signalhub $h_S$ im Fall des Perforationsspalts gem. Fig. 2B deutlich geringer, was auf die das Hindurchtreten des Lichts behindernde Wirkung der stehengebliebenen Papierfasern im Perforationsspalt 5a zurückgeht. Somit kann eine mangelhafte Durchtrennung und Beseitigung der Papierfasern im Perforationsspalt 5a über den Signalhub $h_S$ erfaßt werden.

In Fig. 2C ist schließlich ein dritter Perforationsspalt 5a gezeigt, bei dem zwar keine Papierfasern mehr im Inneren vorhanden sind, da alle Fasern durchgetrennt wurden, bei dem aber die Breite $b_P$ deutlich kleiner ist als bei den Perforationsspalten gem. Fig. 2A oder 2B. Die kleinere Breite $b_P$ des dritten Perforationsspalts 5a zeigt an, daß sich das Papier unter der aufgebrachten Bahnspannung nicht so stark gedehnt hat, wie in den Fällen, die in Fig. 2A und 2B dargestellt sind. Das bedeutet aber gleichzeitig, daß die Kraft, die noch aufzubringen ist, um das Papier an der Perforation zu zerreißen, im Fall von Fig. 2C größer ist als in den beiden anderen Fällen. Mit anderen Worten ist die Perforationsfestigkeit bei einer Perforation gem. Fig. 2C größer. Die Signaldauer $t_S$ des Detektorsignals, das von dem Perforationsspalt 5a gem. Fig. 2C hervorgerufen wird, verkürzt sich dementsprechend im Vergleich mit den Detektorsignalen gem. Fig. 2A oder 2B. Der Signalhub $h_S$ bleibt aber unverändert groß, da keine Papierfasern im Inneren des Perforationsspalts 5a stehengeblieben sind.

Das Detektorsignal S wird der Auswerteeinrichtung 4 zugeführt, die die beiden charakteristischen Größen $t_S$ und $h_S$ aus dem Verlauf des Detektorsignals bestimmt und die Perforationsfestigkeit bzw. eine dazu korrespondierende Größe bestimmt. Dazu werden Vorgaben für die Signaldauer $t_{Ssoll}$ bzw. die Breite $b_{Psoll}$ des Perforationsspalts und für den Signalhub $h_{Ssoll}$ gemacht, die einer bestimmten, vorgegebenen Perforationsfestigkeit entsprechen. Diese Vorgaben können für verschiedene Papiersorten mit Hilfe der bekannten Möglichkeiten und Methoden und für die Meßvorrichtung durch geeignete Kalibrierung in Bezug auf den maximalen Signalhub $h_{max}$ in Form einfacher Versuchsreihen bestimmt werden und stehen anschließend etwa in Form einer Tabelle zur Verfügung. Die Auswerteeinrichtung 4 führt im wesentichen einen Vergleich der jeweils erfaßten Werte $t_S$ und $h_S$ mit diesen Vorgaben durch und bestimmt die momentane Perforationsfestigkeit PF oder die dazu korrespondierende Größe als Funktion der beiden momentanen Werte $t_S$ und $h_S$ ($PF = f(t_S, h_S)$) bzw. der beiden momentanen Werte $b_P$ und $h_S$ ($PF = f(b_P, h_S)$) unter Anwendung der im folgenden beschriebenen Grundsätze.

Ist die momentane Signaldauer $t_S$ größer als die Vorgabe $t_{Ssoll}$ ($t_S > t_{Ssoll}$), dann ist die Perforationsfestigkeit PF kleiner als der vorgegebene Wert. Denn die vorhandene Bahnspannung dehnt die Perforation stärker als durch den Sollwert vorgegeben. Ist die momentane Signaldauer $t_S$ kleiner als die Vorgabe $t_{Ssoll}$ ($t_S < t_{Ssoll}$), so ist die Perforationsfestigkeit PF der Perforation größer als der vorgegebene Wert. Dies bedeutet, daß das Papier der Bahnspannung einen größeren Widerstand entgegensetzt und nicht so weit gedehnt wird, wie durch den Sollwert vorgegeben ist. In jedem Fall ist aber eine Aussage über die Abweichung $|t_s - t_{Ssoll}|$ möglich, die der Abweichung der Perforationsfestigkeit entspricht.

Die Vergleiche sollten vorteilhaft mit Hilfe des Wertes der Breite $b_P$ und der Vorgabe $b_{Psoll}$ durchgeführt werden, wenn von einer konstanten Bewegungsgeschwindigkeit $V_E$ der Endlosforumulare nicht ausgegangen werden kann. Der Auswerteeinrichtung 4 wird dann neben dem Detektorsignal S ein der Bewegungsgeschwindigkeit $V_E$ derEndlosformulare 5 entsprechedes Meßsignal zugeführt, das von einer geeigneten Meßeinrichtung abgegeben wird. Die Auswerteeinrichtung 4 bestimmt dann den Wert $b_P$ mit Hilfe der Beziehung $b_P = t_s \times V_E$.

Ist der momentane Signalhub $h_s$ größer oder gleich der Vorgabe $h_{Ssoll}$ ($h_s >= h_{Ssoll}$), dann wird die Perforationsfestigkeit nicht durch im Perforationsspalt stehengebliebene Papierfasern beeinflußt. Ist der momentane Signalhub $h_s$ kleiner als die Vorgabe $h_{Ssoll}$ ($h_S < h_{Ssoll}$), dann weist dies auf die Perforationsfestigkeit beeinflußende Papierfasern im Perforationsspalt hin.

Stellt die Auswerteeinrichtung 4 eine über ein bestimmtes Maß hinausgehende Abweichung von der vorgegebenen Perforationsfestigkeit oder das Auftreten von Papierfasern im Perforationsspalt fest, erfolgt eine entsprechende Fehlermeldung etwa in Form eines Signals oder eines Ausdrucks auf einem Protokolldrucker. Mit Hilfe der erfindungsgemäßen Meßvorrichtung gem. Fig. 1 kann somit die Perforationsfestigkeit der Endlosformulare 5 kontinuierlich überprüft werden. Für ein Produktionsvolumen kann nach Abschluß der Einbringung der Perforation eine Aussage darüber gemacht werden, ob die Perforationsfestigkeit sich innerhalb eines vorgegebenen Bereichs bewegt oder ob einzelne Perforationen ausserhalb des Bereichs liegen. Mit anderen Worten kann erfindungsgemäß gewährleistet werden, daß der Variationskoeffizient der Perforationsfestigkeit unter einem vorgegebenen Grenzwert, vorzugsweise unter 6% liegt.

Die erfindungsgemäßen Endlosformulare zeichnen sich dadurch aus, daß mit Hilfe der charakteristischen Größen $t_S$ bzw. $b_P$ und $h_S$ die Perforationsfestigkeit für jede einzelne Perforation der Endlosformulare kontinuierlich erfaßt und kontrolliert ist. Die perforationsfestigkeitskontrollierten Endlosformulare gemäß der Erfindung besitzt daher in jedem Fall eine Perforationsfestigkeit, die sicher innerhalb des vorgegebenen Bereichs liegt.

Gegenüber dem bisher bekannten Endlosformularen zeichnen sich die kontinuierlich perforationskontrollierten Endlosformulare somit dadurch aus, daß eine Einhaltung der Spezifikation und der damit verbundenen Anforderungen an die Endlosformulare hinsichtlich der Weiterverarbeitung in Bearbeitungsanlagen, wie z.B. EDV-Druckern mit Sicherheit über ein ganzes Produktionsvolumen feststeht. Bislang erfolgte über die Erfüllung der gestellten Anforderungen an die Endlosformulare keine auf eine Überprüfung zurückgehende Aussage, so daß nur weite Bereichsgrenzen für die Perforation zuverlässig realisierbar waren. Durch die kontinuierlich perforationskontrollieren Endlosformulare, bei denen der Variationskoeffizient, d.h. die Abweichung der Perforationsfestigkeit von einem Mittelwert unter einem Grenzwert, vorzugsweise unter 6% liegt, werden erhebliche Vorteile in Hinblick auf deren Zuverlässigkeit und Einsetzbarkeit erreicht.

Der Signalhub $h_S$ und die Signaldauer $t_S$ bzw. die Breite $b_P$ geben Aufschluß über die Perforationsfestigkeit der Endlosformulare, unabhängig von der Faserlänge, der Faserorientierung und dem Flächengewicht des Papiers. Der Signalhub $h_S$ zeigt an, ob der Schnitt korrekt erfolgt und der Perforationsspalt frei von stehengebliebenen Papierfasern ist. Die Signaldauer $t_S$ bzw. die davon abgeleitete Breite $b_P$ des Perforationsspalts zeigen an, wie weit das Papier unter der aufgebrachten Belastung von der Bruchgrenze entfernt ist, d.h. wieviel Kraft noch aufgenommen werden muß, um das Papier zu reißen.

Die Messung der beiden charakteristischen Großen $h_S$ und $t_S$ kann während der Herstellung der Endlosformulare kontinuierlich und zerstörungsfrei durchgeführt werden, ohne daß die Produktion unterbrochen oder auf eine stichprobenartige Messung zurückgegriffen werden muß.

Vielmehr kann jeder einzelne Perforationsspalt erfaßt und auf die erzielte Perforationsfestigkeit hin überprüft werden, sodaß eine Aussage über den Schwankungsbereich der bei der Produktion der Endlosformulare tatsächlich erzielten Perforationsfestigkeit möglich ist.

Die zuvor erwähnten Vorgabentabellen für $t_{Ssoll}$ und $h_{Ssoll}$ können in die Auswerteeinrichtung 4 vor Beginn der Herstellung der Endlosformulare von Hand eingegeben werden; die Auswerteeinrichtung 4 ist dazu vorteilhaft mit einer Eingabeeinheit ausgestattet, die auch eine Anzeige und Änderung der Vorgaben ermöglicht. Die eingegebenen Werte der Vorgabentabelle werden in einer bevorzugten Ausführungsform der Auswerteeinrichtung 4 in einer Speichereinheit abgespeichert, von wo sie auf einfache Weise abgerufen werden können, ohne jedesmal erneut eingegeben werden zu müssen.

Ferner umfaßt die Auswerteeinrichtung 4 in einer vorteilhaften Ausgestaltung eine Speichereinheit zur Abspeicherung der jeweils bestimmten Perforationsfestigkeit bzw. einer dazu korrespondierenden Größe und eine Ausgabeeinheit, über die diese Werte oder nur die nicht in den vorgegebenen Bereich fallenden Werte nach Abschluß der Herstellung eines Endlosformular-Produktionsvolumens ausgegeben werden können.

Das erfindungsgemäße Verfahren zur Herstellung von Endlosformularen umfaßt im wesentlichen die Schritte des Einbringens der Querperforationen in die Papierbahn und der kontinuierlichen Messung der Perforationsfestigkeit der eingebrachten Querperforationen dahingehend, daß der Variationskoeffizient der Perforationsfestigkeit unter einem vorgegebenen Grenzwert, vorzugsweise unter 6% liegt.

Im Einzelnen umfaßt eine Ausgestaltung des erfindungsgemäßen Verfahrens die Schritte des Einbringens der Querperforationen in die Papierbahn, des Erfassens einer Größe ($t_s$, $b_p$), die zu der Perforationsfestigkeit der Perforation korrespondiert, für Jede Querperforation und des Vergleichs der erfaßten Größe mit einem vorgegebenen Grenzwert ($t_{Ssoll}$, $b_{psoll}$).

Das Erfassen der zur Perforationsfestigkeit korrespondierenden Größe erfolgt durch die Schritte des Einstrahlens eines Lichtstrahls, vorzugsweise eines Laser-Lichtstrahls auf die Papierbahn derart, daß der Lichtstrahl durch die Perforationsspalte der bewegten Papierbahn hindurchtritt, des Erfassens des Lichtstrahls mittels einer Detektorvorrichtung und des Auswertens des von der Detektorvorrichtung abgegebenen Signals im Hinblick auf die zur Perforationsfestigkeit korrespondierenden Größe ($t_s$, $b_p$). Dabei wird als zur Perforationsfestigkeit korrespondierende Größe die Dauer ($t_S$) des Detektorsignals vorzugsweise die Perforationsspaltbreite ($b_p$) herangezogen.

In einer weiteren Ausgestaltung umfaßt das erfindungsgemäße Verfahren den Schritt des Erfassen einer Größe ($h_s$), die zur Güte der Perforation korrespondiert und die Perforationsfestigkeit beeinflußt, für jede Querperforation und des Vergleichs der erfaßten Größe mit enem vorgegebenen Grenzwert ($h_{Ssoll}$).

Das Erfassen der zur Güte der Perforation korrespondierenden Größe erfolgt durch die Schritte des Einstrahlens eines Lichtstrahls, vorzugsweise eines Laser-Lichtstrahls auf die Papierbahn derart, daß der Lichtstrahl durch die Perforationsspalte der bewegten Papierbahn hindurchtritt, des Erfassens des Lichtstrahls mittels einer Detektorvorrichtung und des Auswertens des von der Detektorvorrichtung abgegebenen Signals im Hinblick auf die zur Güte der Perforation korrespondierenden Größe ($h_s$). Dabei wird als zur Güte der Perforation korrespondierende Größe der Signalhub ($h_s$) des Detektorsignals herangezogen.

Durch die erfindungsgemäße Vorrichtung und das erfindungsgemäße Verfahren zur Herstellung von Endlosformularen ist erstmalig eine Möglichkeit geschaffen worden, die eine zuverlässige Aussage über ein gesamtes Produktionsvolumen von Endlosformularen im Hinblick auf die Perforationsfestigkeit erlaubt, so daß für ein ganzes Produktionsvolumen die Einhaltung der Vorgaben an die Perforationsfestigkeit garantiert werden kann. Denn Produktionsvolumen, die die Anforderungen nicht erfüllen, d.h. bei denen zumindest teilweise Perforationen die geforderte Perforationsfestigkeit nicht aufweisen, können ausgesondert werden. Die den Anforderungen gerecht werdenden Produktionsvolumen besitzen aber eine Perforationsfestigkeit, die sicher innerhalb des vorgegebenen Bereichs liegt, ohne daß Ausreißer zu erwarten sind. Diese Art der Qualitätsbestimmung war bislang nicht möglich und stellt bereits einen erheblichen Fortschritt gegenüber den bisher bekannten Methoden zur Prüfung der Perforationsfestigkeit dar.

Durch die erfindungsgemäße Meßvorrichtung kann die Einhaltung von Vorgaben für die Perforationsfestigkeit aber auch dadurch beeinflußt und gewährleistet werden, daß aufgrund der Meßergebnisse eine wiederholte Einstellung der Perforationsvorrichtung vorgenommen bzw. eine Nachstellung bei verschleißbedingten Veränderungen durchgeführt wird. Dabei ist die Herstellung der Endlosformulare zu unterbrechen bzw. das Ende einer Produktionsvorganges abzuwarten.

**Patentansprüche**

1. Endlosformulare, bedruckt oder unbedruckt, mit zumindest Querperforationen, die als Abtrenn- und/oder Falzperforation dienen, dadurch **gekennzeichnet,** daß die Perforationsfestigkeit der Querperforationen (5a) im Hinblick auf einen vorgegebenen Wert ($t_{Ssoll}$, $b_{psoll}$) kontinuierlich derart kontrolliert ist, daß der Variationskoeffizient der Perforationsfestigkeit unter einem vorgegebenen Grenzwert, vorzugsweise unter 6% liegt.

2. Endlosformulare nach Anspruch 1, dadurch **gekennzeichnet,** daß der Variationskoeffizient der Perforationsfestigkeit unter 4% liegt.

3. Endlosformulare nach einem der Ansprüche 1 oder 2, dadurch **gekennzeichnet,** daß sich die Breite ($b_p$) der Perforationsspalte, die sich unter einer bestimmten Bahnspannung im Bereich der Querperforationen (5a) ausbilden, von einem Wert ($b_{psoll}$), der der vorgegebenen Perforationsfestigkeit entspricht, nur um einen Betrag abweicht, der dem Grenzwert des Variationskoeffizienten der Perforationsfestigkeit entspricht.

4. Endlosformulare nach einem der Ansprüche 1, 2 oder 3, dadurch **gekennzeichnet,** daß die Güte ($h_S$) der Perforation stets größer oder gleich einem vorgegebenen Grenzwert ($h_{Ssoll}$) ist.

5. Verfahren zur Herstellung von Endlosformularen nach einem oder mehreren der vorhergehenden Ansprüche mit folgenden Schritten: Einbringen der Querperforationen in eine Papierbahn, und kontinuierliche Messung der Perforationsfestigkeit der eingebrachten Querperforation dahingehend, daß der Variationskoeffizient der Perforation unter einem vorgegebenen Grenzwert, vorzugsweise unter 6% liegt.

6. Verfahren nach Anspruch 5, **gekennzeichnet** durch die folgenden Schritte: Erfassen einer Größe ($t_S$, $b_p$), die zu der Perforationsfestigkeit korrespondiert, für jede der Querperforationen (5a), und

Vergleich der jeweils erfaßten Große mit einem vorgegebenen Grenzwert ($t_{Ssoll}$, $b_{psoll}$).

7. Verfahren nach Anspruch 6, dadurch **gekennzeichnet,** daß das Erfassen der zur Perforationsfestigkeit korrespondierenden Größe erfolgt durch die folgenden Schritte: Einstrahlen eines Lichtstrahls, vorzugsweise eines Laser-Lichtstrahls auf die Papierbahn derart, daß der Lichtstrahl durch die Perforationsspalte der bewegten Papierbahn in Abhängigkeit von der Bewegung hindurchtritt, Erfassen des Lichtstrahls mittels einer Detektorvorrichtung, und Auswerten eines von der Detektorvorrichtung abgegebenen Signals im Hinblick auf die Dauer ($t_S$) des Detektorsignals.

8. Verfahren nach Anspruch 7, **gekennzeichnet** durch die folgenden Schritte: Erfassen der Geschwindigkeit ($V_E$) der bewegten Papierbahn, und Auswerten eines von der Detektorvorrichtung abgegebenen Signals im Hinblick auf die Perforationsspaltbreite ($b_p$).

9. Verfahren n ach einem der Ansprüche 5 bis 8, **gekennzeichnet** durch die Schritte: Erfassen einer Größe ($h_S$), die zur Güte der Perforation korrespondiert und die Perforationsfestigkeit beeinflußt, für jede der Querperforationen (5a), und Vergleich der jeweils erfaßten Größe mit einem vorgegebenen Grenzwert ($h_{Ssoll}$).

10. Verfahren nach Anspruch 9, dadurch **gekennzeichnet,** daß das Erfassen der zur Güte der Perforation korrespondierenden Größe erfolgt durch die folgenden Schritte: Einstrahlen eines Lichtstrahls, vorzugsweise eines Laser-Lichtstrahls auf die Papierbahn derart, daß der Lichtstrahl durch die Perforationsspalte der bewegten Papierbahn in Abhängigkeit von der Bewegung hindurchtritt, Erfassen des Lichtstrahls mittels einer Detektorvorrichtung, und Auswerten eines von der Detektorvorrichtung abgegebenen Signals im Hinblick auf den Signalhub ($h_S$) des Detektorsignals.

11. Vorrichtung zur Herstellung von Endlosformularen nach einem oder mehreren der Ansprüche 1 bis 4, mit einer Einrichtung zum Einbringen der Querperforationen (5a), und eine Meßvorrichtung (1, 2, 3, 4) zur kontinuierlichen Messung der Perforationsfestigkeit der Querperforationen (5a).

**12.** Vorrichtung nach Anspruch 11,
dadurch **gekennzeichnet,** daß
die Messvorrichtung umfaßt:
eine Lichtquelle (1), vorzugsweise eine Laserlichtquelle, zur Abgabe eines Lichtstrahls in Richtung auf die die Querperforationen enthaltende Papierbahn (5),
eine Detektoreinrichtung (3) zur Erfassung des Lichtstrahls, der an den Stellen der Querperforationen (5a) durch die Papierbahn (5) in Abhängigkeit von deren Bewegung hindurchtritt, und zur Abgabe eines Detektorsignals (S) und
eine Auswerteeinrichtung (4) zum Empfang und zur Auswertung des Detektorsignals (S) im Hinbick auf zumindest eine zur Perforationsfestigkeit korrespondierende Größe ($t_S$, $b_P$).

**13.** Vorrichtung nach Anspruch 12,
dadurch **gekennzeichnet,** daß
die Auswerteeinheit (4) ausgestaltet ist zur Auswertung des Detektorsignal (S) von der Detektoreinrichtung (3) im Hinblick auf die Dauer ($t_S$) des Detektorsignals als zur Perforationsfestigkeit korrespondierende Größe.

**14.** Vorrichtung nach Anspruch 12,
dadurch **gekennzeichnet,** daß
eine Einrichtung zur Erfassung der Bewegungsgeschwindigkeit ($V_E$) der Papierbahn (5) und zur Abgabe eines entsprechenden Signals vorgesehen ist, und
die Auswerteeinrichtung (4) ausgestaltet ist zum Empfang des zur Geschwindigkeit ($V_E$) korrespondierenden Signals und zur Ermittlung auf der Grundlage der Signaldauer ($t_S$) des Detektorsignals (S) der Perforationsspaltbreite ($b_P$) der Querperforationen (5a) als zur Perforationsfestigkeit korrespondierende Größe.

**15.** Vorrichtung nach einem der Ansprüche 12 bis 14,
dadurch **gekennzeichnet,** daß
die Auswerteeinrichtung (4) ferner ausgestaltet ist zur Ermittlung einer zur Güte der Perforation korrespondierenden Größe ($h_S$).

**16.** Vorrichtung nach Anspruch 15,
dadurch **gekennzeichnet,** daß
die Auswerteeinrichtung (4) ausgestaltet ist zur Ermittlung des Signalhubs ($h_S$) des Detektorsignals (S) als zur Güte der Perforation korrespondierende Größe.

**17.** Vorrichtung nach einem der Ansprüche 12 bis 16,

dadurch **gekennzeichnet,** daß
eine optische Einrichtung (2) zur Bündelung des Lichtstrahls vorgesehen ist.

**18.** Vorrichtung nach Anspruch 17,
dadurch **gekennzeichnet,** daß
die optische Einrichtung (2) den Lichtstrahl derart bündelt, daß der Lichtstrahl den kleinsten Durchmesser in der Ebene der Papierbahn (5) besitzt.

**19.** Vorrichtung nach einem der Ansprüche 12 bis 18,
dadurch **gekennzeichnet,** daß
der Lichtstrahl vorzugsweise senkrecht auf die Papierbahn (5) auftrifft.

# Fig.1

# Fig.2A

# Fig.2B

# Fig.2C

Europäisches Patentamt

# EUROPÄISCHER RECHERCHENBERICHT

Nummer der Anmeldung

EP     92 11 7035

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 615 929 (G. ALEXANDER)<br>* Anspruch 1 *<br>--- | 1 | G01N21/89<br>G01B11/14<br>B41L1/32<br>B42D5/02<br>G07C3/14 |
| A | GB-A-1 267 997 (WIGGINS TEAPE RESEARCH)<br>--- | 1 | |
| A | US-A-3 761 723 (E.M.DECOCK)<br>--- | | |
| A | PATENT ABSTRACTS OF JAPAN<br>vol. 9, no. 83 (P-348)(1806) 12. April 1985<br>& JP-A-59 214 708 ( KONISHIROKU SHASHIN KOGYO K.K. ) 4. Dezember 1984<br>* Zusammenfassung *<br>--- | | |
| A | FR-A-2 649 480 (KODAK-PATHE)<br>--- | | |
| A | US-A-2 641 956 (C.H.MORISSON)<br><br>----- | | |

|  |
|---|
| **RECHERCHIERTE SACHGEBIETE (Int. Cl.5)** |
| G01N<br>B26F<br>G07C<br>B42D<br>G01B<br>B41L |

Der vorliegende Recherchenbericht wurde für alle Patentansprüche erstellt

| Recherchenort | Abschlußdatum der Recherche | Prüfer |
|---|---|---|
| DEN HAAG | 20 JANUAR 1993 | VAN DEN BULCKE E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes Dokument

EPO FORM 1503 03.82 (P0403)